# EUROPEAN PATENT APPLICATION

(11) **EP 1 213 309 A1**
(43) Date of publication of application: **12.06.2002**
(21) Application number: 00126685.7
(22) Date of filing: 05.12.2000
(51) Int. Cl.: C08G 18/10, C08G 18/28, C08G 18/38, C09J 175/04

(54) **Supramolecular polymer forming polymer**

(71) Applicant: HUNTSMAN INTERNATIONAL LLC, Salt Lake City, Utah 84108 (US)
(72) Inventor: The designation of the inventor has not yet been filed
(74) Representative: Moens, Marnix Karel Christiane

(57) **Abstract**

The invention provides a polymer having the following general formula : 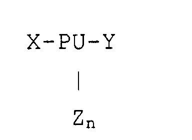 where
PU is a polymer chain comprising at least one polyurethane chain; and
n ranges from 0 to 8;
X, Y and Z, identical or different are H-bonding sites.

The invention also provides a supramolecular polymer comprising units that form H-bonds with one another, wherein at least one of these units is a polymer according to the invention.

The supramolecular polymer is useful as an hot melt adhesive, in rotational or slush molding, in injection molding and in the manufacture of TPU foams.

The invention also provides a process for the preparation of the polymer.

## Description

This invention relates to a polymer which is able to form a supramolecular polymer, to the preparation of such a polymer and to the uses of the formed supramolecular.

It is known for several years that supramolecular polymers are polymers in which the monomers are at least in part bond to one another via H-bridges.

When the monomer units have a low molecular weight, they form at low temperature a rigid dimensionally stable polymer. At higher temperatures however, since the H-bridges are much weaker, essentially only monomeric units are present and can be easily handled.

International Patent Application No. WO 97/46607 discloses a supramolecular polymer containing monomeric units that form H-bridges with one another, the H-bridge-forming monomeric units in pairs forming at least 4-H-bridges with one another. As H-bridge-forming monomeric units, substituted ureido-pyrimidones and ureidopyrimidines were used. In examples XII and XIII of that International Patent Application is described the end-capping of polydimethyltrisiloxanes with 4-benzyloxy-6-(3-butenyl)-2-butylureidopyrimidine and 6-(3-butenyl)-2-butylureido-4-pyrimidone, respectively.

In "Reversible Polymers Formed from Self-Complementary Monomers Using Quadruple Hydrogen Bonding", by R.P. Sijbesma, H.B. Beijer, L. Brunsveld, B.J.B. Folmer, J.H.K. Ky Hirschberg, R.F.M. Lange, J.K.L. Lowe, E.W. Meijer, published in Science, Vol. 278, 28 November 1997, is disclosed in Fig. 2 the reaction of 6-tridecylisocytosine with hexanediisocyanate to give a bifunctional compound (2a) which forms reversible polymers. In Fig. 6 of that reference is also disclosed the functionalization of a trifunctional copolymer of propylene oxide and ethylene oxide with a diisocyanate, followed by a reaction with methylisocytosine to give a compound (7) which has the ability to form reversible polymer networks. These compounds (2a) and (7) are supposed to allow the formation of polymer networks that can be used in hot melts and coatings. However, as indicated in the reference, compound (2a) has a tendency to crystallise and compound (7) exhibits poor mechanical properties.

In "New Polymers Based on the Quadruple Hydrogen Bonding Motif", by Brigitte J.B. Folmer, pages 91-108, PhD Thesis, Technische Universiteit Eindhoven, 2000, is disclosed (see in particular page 96) the end-capping of hydroxy terminated polymers with a reactive synthon obtained by the reaction of methylisocytosine with 1,6-hexanediisocyanate. The hydroxy terminated polymers are a hydrogenated polybutadiene, a polyether, a polycarbonate and a polyester.

An object of this invention is therefore to provide a polymer which is able to form a supramolecular polymer. This polymer has the following general formula : 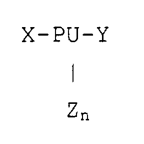 where
PU is a polymer chain comprising at least one polyurethane chain; and
n ranges from 0 to 8;
X, Y and Z, identical or different are H-bonding sites.

Another object of this invention is a supramolecular polymer formed at least from the polymer of the invention. Such a supramolecular polymer comprises units that form H-bridges with one another, wherein at least one of these units is the above polymer.

Such a supramolecular polymer combines good mechanical properties and low melt viscosities.

A further object of this invention is to provide a process for the preparation of the above polymer. This process comprises the step of reacting a polymer comprising at least one polyurethane chain and at least two free -NCO groups with at least one compound A having at least one group able to react a -NCO group and at least one H-bonding site.

Other objects, features and advantages will become more apparent after referring to the following specification

The polymer of the invention has the following general formula : 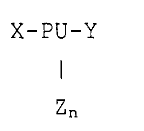 where
PU is a polymer chain comprising at least one polyurethane chain;
n ranges from 0 to 2; and
X, Y and Z are identical or different and are H-bonding sites.

### Polyurethane chain PU

According to the invention, the polymer chain PU comprises at least one polyurethane chain.

According to one embodiment, the PU is thermoplastic and/or elastomeric.

According to another embodiment, the polyurethane chain preferably comprises at least one soft block and at least two hard blocks. The soft and hard blocks are according to the common general knowledge in the art.

The polyurethane chain may have a molecular weight (MWn) ranging between large limits. The molecular weight is calculated according to the Dryadd Pro model (1998, Oxford Materials Ltd, UK). It generally has a low average molecular weight, i.e., an average molecular weight of less than 20000. Preferably, the average molecular weight is in the range of 2000 to 15000. More preferably, the average molecular weight is between 2000 and 10000.

This PU chain is obtained by classical methods known in the art (see for example Poyurethanes Handbook 2^{nd} edition, G. Oertel, 1994). The chains are notably obtained by the reaction of an isocyanate, an isocyanate-reactive compound (a polyol) and a chain extender.

For example, the suitable organic polyisocyanates for use in the process of the present invention include any of those known in the art for the preparation of polyurethanes., and in particular the aromatic polyisocyanates such as diphenylmethane diisocyanate in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, although these are not preferred, toluene diisocyanate in the form of its 2,4- and 2,6-isomers and mixtures thereof, 1,5-naphthalene diisocyanate and 1,4-diisocyanatobenzene. Other organic polyisocyanates which may be mentioned include the aliphatic diisocyanates such as isophorone diisocyanate, 1,6-diisocyanatohexane and 4,4'-diisocyanatodicyclohexylmethane. Preferred are TDI or MDI, IPDI, HMDI and other aliphatic isocyanates. Most preferred is MDI, especially 4,4'-MDI. The functionality is preferably 2. Mixtures may be used.

Suitable isocyanate-reactive compounds to be used in the process of the present invention include any of those known in the art for the preparation of polyurethanes. Of particular importance are polyols and polyol mixtures having average hydroxyl numbers of from 20 to 300, especially from 25 to 150 mg KOH/g, and hydroxyl functionalities of from 1.5 to 3, especially from 1.8 to 2.2, and a MW generally from 750 to 6000. Suitable polyols have been fully described in the prior art and include reaction products of alkylene oxides, for example ethylene oxide and/or propylene oxide, with initiators containing from 2 to 8 active hydrogen atoms per molecule. Suitable initiators include: polyols, for example glycerol, trimethylolpropane, triethanolamine, pentaerythritol, sorbitol and sucrose; polyamines, for example ethylene diamine, tolylene diamine (TDA), diaminodiphenylmethane (DADPM) and polymethylene polyphenylene polyamines; and aminoalcohols, for example ethanolamine and diethanolamine; and mixtures of such initiators. Other suitable polymeric polyols include polyesters obtained by the condensation of appropriate proportions of glycols and higher functionality polyols with dicarboxylic or polycarboxylic acids. Still further suitable polymeric polyols include hydroxyl terminated polythioethers, polyamides, polyesteramides, polycarbonates, polyacetals, polyolefins and polysiloxanes. The isocyanate-reactive compound is preferably a polyol which is preferably a polyether or a polyester or mixtures thereof. Mixtures may be used.

A chain extender is classically used; it is traditionally a low molecular weight polyol, typically a diol. The MW generally ranges from 62 to 750; the functionality generally ranges from 1.9 to 2.1. Examples of suitable diols include ethylene glycol, diethylene glycol, butanediol, triethylene glycol, tripropylene glycol, 2-hydroxyethyl-2'-hydroxypropylether, 1,2-propylene glycol, 1,3-propylene glycol, Pripol® (Uniquema, Gouda, NL), dipropyl glycol, 1,2-, 1,3- and 1,4-butylene glycols, 1,5-pentane diol, bis-2-hydroxypropyl sulphide, bis-2-hydroxyalkyl carbonates, p-xylylene glycol, 4-hydroxymethyl-2,6-dimethyl phenol and 1,2-, 1,3- and 1,4-dihydroxy benzenes. PEG, PPG (e.g. 200) as well as PTHF (also known as PTMG) (e.g. 400) may also be used. Mixtures may be used.

The quantities of the polyisocyanate compositions and the polyfunctional isocyanate-reactive compositions as well as those of the chain extender to be reacted (in the absence of end-cap monomer) will depend upon the nature of the polyurethane to be produced and will be readily determined by those skilled in the art. The isocyanate index can vary within broad limits, such as between 105 and 400.

### H-bonding groups

According to the invention, the polymer chain PU bears the H-bonding groups X and Y, and optionally Z, which are identical or different.

Preferably, X and Y, identical, are the end groups of the polymer chain PU.

Generally, the H-bonding groups X and Y (and Z) have at least two sites capable of H-donor capability and at least two sites capable of H-acceptor capability (where these two sites may not be fully reacted).

The H-donor site may be a H-donor group well known by those skilled in the art. Such an H-donor group may comprise -NH-, -OH or -SH groups.

The H-acceptor site may be a H-acceptor site well known by those skilled in the art. Such an H-acceptor site may comprise atoms like O, N or S.

According to one embodiment of the invention, X and Y (and Z) includes the group -NH-CO-NH-.

According to one embodiment, X and Y are obtained by the reaction of a terminal isocyanate group with a compound of formula H₂N-R₁R₂, where R₁ and R₂ are each independently a C1-C6 alkyl or C3-C6 cycloalkyl group, or together can form a ring having one or two cycle(s), one or both of R₁ and R₂ being optionally interrupted by one or more heteroatom(s) selected from N, O and S.

The amine can be of formula H₂N-C(R₃)=N-R₄, where R₃ and R₄ are each independently a C1-C6 alkyl or C3-C6 cycloalkyl group, or together can form a ring having one or two cycle(s), one or both of R₃ and R₄ being optionally interrupted by one or more heteroatom(s) selected from N, O and S.

Preferably, at least one of R₁ and R₂ or R₃ and R₄ respectively is interrupted by one or more heteroatom(s).

Preferably, the amine is of formula 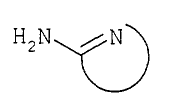 where the curve is a ring having one or two cycles, optionally interrupted by one or two heteroatoms selected from N, O and S.

The molecular weight is preferably below 400.

Preferably, the H-bonding site of the compound A reacting with the -NCO group is adjacent to the group which reacts with the -NCO group of the polymer.

The amine can be selected from the group consisting of 2-aminopyrimidine, isocytosine, 6-alkylisocytosine such as 6-methylisocytosine, 2-aminopyridine, 5-amino-uracil 6-tridecylisocytosine, 6-phenyl-isocytosine, 2-amino-6-(3-butenyl)-4-pyrimidone, p-di-(2-amino-6-ethyl-4-pyrimidone) benzene, 2-amino 4-pyridone, 4-pyrimidone 6-methyl-2-amino-4-pyrimidone, 6-ethyl-2-amino-4-pyrimidone, 6-phenyl-2-amino-4-pyrimidone, 6-(p-nitrophenyl)isocytosine, 6-(trifluoromethyl) isocytosine and their mixtures.

Examples of such compounds are 2-aminopyrimidine, 5-aminouracil, isocytosine and 6-alkylisocytosine such as 6-methylisocytosine.

The preferred amines are 2-aminopyrimidine and 6-alkylisocytosine such as 6-methylisocytosine.

The weight percentage of the groups X and Y based on the weight of the entire polymer of the invention generally ranges from 0.5 to 20% and preferably from 1 to 10%.

For example, one can cite as amine compounds the following compounds:
2-aminopyrimidine (AP): (formula) 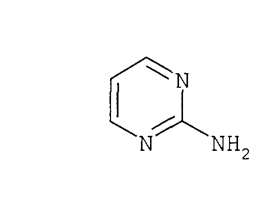
isocytosine : (formula) 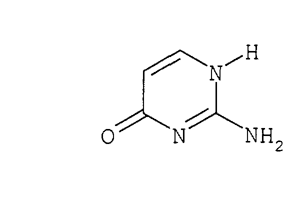
6-methylisocytosine (Melso) : (formula)

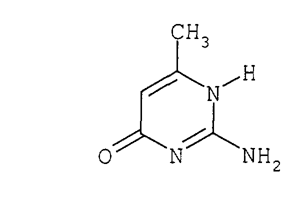

### Process according to the invention

The polymer of the invention may be prepared according to a process comprising the step of reacting a polymer comprising at least one polyurethane chain and at least two free -NCO groups with at least one compound A having at least one group able to react a -NCO group and at least one H-bonding site.

This compound A is described above.

2-aminopyrimidine is one of the preferred reactants, since its melting point is quite low, about 125°C. This is interesting from a production viewpoint, because it allows to prepare the polymer of the invention at lower temperatures.

6-alkylisocytosine such as 6-methylisocytosine is one of the preferred reactants, because of the powerful effect, i.e. the resulting (supra)polymer exhibits high mechanical properties with low viscosities at melt.

A preferred process is one in which the polymers are obtained by reacting a polyisocyanate (1) with a functionality of 2, a polyol (2) having a MW from 750 to 6000 and a functionality from 1.8 to 2.2, a polyol (3) having a MW from 62 to 750 with a functionality of 1.9 to 2.1 and an amine compound (4) of formula H₂N-C(R₃)=N-R₄, where R3 and R4 are each independently a C1-C6 alkyl or C3-C6 cycloalkyl group, or together can form a ring having one or two cycle(s), all being optionally interrupted by one or more heteroatom(s) selected from N, O and S, with a MW less than 400 wherein the amount of isocyanate (1), polyol (2), polyol (3) and amine (4) is 10-50, 35-90, 1-30 and 0.5-20 by weight respectively per 100 parts by weight of isocyanate (1), polyol (2), polyol (3) and amine (4) wherein the reaction is conducted at an isocyanate index of 90 to 200, preferably 95 to 150, especially 98 to 102.

The above index also applies to any general process involving the reaction of polyisocyanate compositions, polyfunctional isocyanate-reactive compositions, chain extender and end-cap monomer (or compound A).

### Supramolecular polymers of the invention

Thanks to its H-bonding groups X and Y, the polymer of the invention has the ability to allow the formation of a supramolecular polymer at room temperature.

This is represented below, with isocytosine as an example. The dotted lines represent the H-bonds.

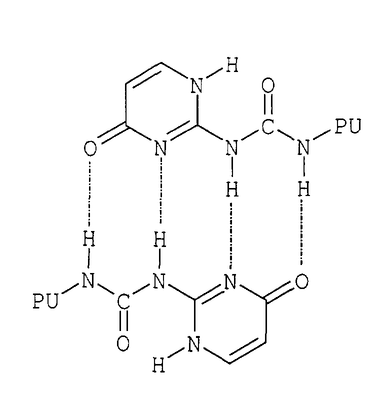

Therefore, an object of the invention is also a supramolecular polymer comprising units that form H-bridges with one another, and in which at least one of these units is a polymer according to the invention as described above.

The remaining units can be different units, for example, units as described in aforesaid International Patent Application No. WO 97/46607. Preferably the units are the same.

In the polymer of the invention, the groups X and Y generate thermoreversible linear chain extension through H-bonding interactions.

Thus the units have the capability to auto chain extend by chain-end interaction through H-bonding interaction.

Since the H bonds are thermoreversible, at low temperatures, the H-bond interaction is high and the supramolecular polymer has an apparent high molecular weight. At high temperatures, the H-bond interaction does not exist anymore or is low and the supramolecular polymer mainly decomposes into its monomeric units and behaves as a low molecular weight polymer.

In other words, when heated, the hydrogen bonds break and give a low viscosity material. Therefore, the supramolecular polymer has pseudo-high molecular weight properties at room temperature but low molecular weight properties at melt.

### Uses of the supramolecular polymer of the invention

The supramolecular polymer of the invention can generally be used in all applications where the PUs (such as those forming the PU chain) are used.

Hot melts adhesive is one of the preferred applications. In this case, a unique feature of the supramolecular polymer of the invention is that it provides an adhesive having no unreacted NCO group (unlike reactive hot-melts that require water to fully cure). This is also an advantage in terms of safety and handling. Another unique feature of the supramolecular polymer of the invention is that it does not require solvent, unlike known solvent-borne TPU adhesives.

Another advantage provided by the supramolecular polymer of the invention is that it does not need moisture to reach ultimate mechanical properties. As such, it can be used in adhesive applications of non-moisture permeable sustrates like Al-Al joints.

Another application is rotational and/or slush molding, since fluidity is very high under the conditions used, ensuring a good spread in the mold. Still another application is injection molding and the manufacture of TPU foams.

The main advantage of the supramolecular polymers is their lower viscosity at melt than the uncapped ones (which do not form supramolecular polymers). This allows easier processing, while retaining good mechanical properties at room temperature. To evaluate their efficiency, the properties were plotted versus viscosity at melt, since an increase in melt viscosity corresponds to an increase in the molecular weight.

### Examples

### Example 1.

Prepolymer 1 was prepared by stirring a mixture of 73pbw of a polypropyleneoxide (PPG2000) having a nominal functionality of 2 and nominal MW 2000 together with 27pbw "Suprasec MPR" at 87°C under nitrogen for three hours. After cooling, the prepolymer was stored as a masterbatch under nitrogen.

A pre-calculated amount of 1,4-butanediol BD (50wt% solution in dimethylacetamide) was added dropwise over a period of 20 minutes to a known amount of a stirred 50wt% dimethylacetamide solution of the prepolymer at 87°C under nitrogen and the heating/stirring were maintained for a further 3 hours. A dimethylacetamide solution of the desired end-capping compound was added to the stirred reaction mixture at 87°C and the reaction conditions were maintained for a further 3 hours. After cooling, the TPU or TRPU was isolated by casting at 50°C in a vacuum oven or by precipitation of a 30wt% dimethylacetamide solution into a four-fold (by mass) excess of a non-solvent (80vol% water/20vol% ethanol). The formulations of the resultant TPUs and TRPUs are given in Table 1.

**Table 1.**

| Sample | End-Capping Compound | pbw Prepol. 1 | pbw BD | pbw End Group |
|---|---|---|---|---|
| 1A1 | isocytosine | 92.5 | 5 | 2.5 |
| 1A2 | isocytosine | 93.0 | 5.5 | 1.5 |
| 1A3 | isocytosine | 93.1 | 5.9 | 1.0 |
| 1B1 | 6-methyl isocytosine | 93.0 | 5.0 | 2.0 |
| 1B2 | 6-methyl isocytosine | 92.65 | 5.5 | 1.85 |
| 1B3 | 6-methyl isocytosine | 92.6 | 5.9 | 1.5 |
| 1C1 | 2-amino pyrimidine | 92.2 | 4.9 | 2.9 |
| 1C2 | 2-amino pyrimidine | 92.2 | 5.5 | 2.3 |
| 1C3 | 2-amino pyrimidine | 92.2 | 5.9 | 1.9 |
| 1D1 | ethoxyethoxy-ethanol | 88.2 | 4.7 | 7.1 |
| 1D2 | ethoxyethoxy-ethanol | 88.9 | 5.3 | 5.8 |
| 1D3 | ethoxyethoxy-ethanol | 89.9 | 5.7 | 4.4 |
| 1D4 | ethoxyethoxy-ethanol | 90.7 | 6.3 | 3.0 |
| 1E | None | 92.6 | 7.4 | 0 |

Tensile testing was performed at ambient temperature and a cross-head speed of 100mm/minute on compression-moulded tensile specimens of type S2 (norm DIN53504; 2mm thickness). The results of these tests are recorded in Table 2 (at ambient temperature).

**Table 2**

| Sample | Tensile Strength (Mpa) | %Elongation at Break |
|---|---|---|
| 1A1 | 2.66 | 487 |
| 1A2 | 3.98 | 655 |
| 1A3 | 7.41 | 760 |
| 1B1 | 2.32 | 308 |
| 1B2 | 4.20 | 618 |
| 1B3 | 7.15 | 705 |
| 1C1 | 1.51 | 124 |
| 1C2 | 2.45 | 211 |
| 1C3 | 3.10 | 278 |
| 1D1 | - | - |
| 1D2 | 1.15 | 58 |
| 1D3 | 1.77 | 153 |
| 1D4 | 2.73 | 212 |
| 1^{E} | 5.41 | 553 |

### Rheology

The rheological performance of the TPUs was assessed by Rotational Dynamic Shear (RDS) experiments using a Rheometrics RMS800 rheometer.

More precisely, RDS rheometry was used to determine the melting behavior and the viscoelastic behavior of the TPUs in the molten state.

The experiments were carried out in the following way.

First, a solvent casting (0.5 mm thick) was prepared by dissolving each TPU in DMAc to give approximately a 25 w/w % solution. 160 g of the solution was then degassed and poured into a flat glass mould in a cool oven. The solvent was then removed by leaving the casting in the oven at 80°C for 24 hours.

Then two 25 mm diameter discs were cut from the solvent casting and inserted under a slight normal pressure between two 25 mm diameter parallel plates to give a 1 mm-thick specimen.

Each experiment was then programmed using the following values :
radius : 12.5 mm
frequency : 10.0 rad/s
initial temperature : 40°C
final temperature : 250 °C
step size : 5°C/min
strain : 5%
ramp rate : 5
measurement time : 30 s

The viscosities of the polymers in the molten state at 180°C and 200°C are recorded in Table 3.

**Table 3**

| Sample | Melt Viscosity at 180°C (Pa.s) | Melt Viscosity at 200°C (Pa.s) |
|---|---|---|
| 1A1 | 3 | 0.8 |
| 1A2 | 34.5 | 2.0 |
| 1A3 | 122.5 | 44 |
| 1B1 | 3.75 | 08 |
| 1B2 | 9 | 4 |
| 1B3 | 56 | 5.5 |
| 1C1 | 2.6 | 1.9 |
| 1C2 | 18.9 | 7.7 |
| 1C3 | 77 | 19 |
| 1D1 | 0.7 | 0.3 |
| 1D2 | 5 | 3 |
| 1D3 | 15 | 5 |
| 1D4 | 95 | 12 |
| 1E | 174 | 34 |

### Example 2.

Prepolymer 1 was synthesised according to the procedure described in Example 1. A pre-calculated amount of a 50wt% solution of Suprasec MPR (Table 3) was then added to a stirred 50wt% dimethylacetamide solution of Prepolymer 1 at 87°C under nitrogen and the reaction continued for 3 hours.

In the case of Polymer 2A a dimethylacetamide solution of 6-methylisocytosine was added and the resultant reaction mixture heated with stirring at 87°C for 3 hours. After cooling, the polymer was isolated by casting at 50°C in vacuo.

The following table 4 gives the weight composition.

**Table 4**

| Sample | Pbw PPG2000 | pbw Suprasec MPR | pbw melso |
|---|---|---|---|
| 2A | 83.7 | 14.8 | 1.5 |
| 2B | 83.7 | 16.3 | 0 |

### Example 3.

Prepolymer 3 was prepared by stirring a mixture of 78.6pbw of a polyadipate ester (Daltorez P765) having a nominal functionality of 2 and nominal MW 2200 together with 21.4pbw "Suprasec MPR" at 87°C under nitrogen for three hours. After cooling, the prepolymer was stored as a masterbatch under nitrogen.

A pre-calculated amount of 1,4-butanediol (50wt% solution in dimethylacetamide) was added dropwise over a period of 20 minutes to a known amount of a stirred 50wt% dimethylacetamide solution of the prepolymer at 87°C under nitrogen and the heating/stirring were maintained for a further 3 hours. A dimethylacetamide solution of the desired end-capping compound was added to the stirred reaction mixture at 87°C and the reaction conditions were maintained for a further 3 hours. After cooling, the TPU or TRPU was isolated by casting at 80°C in an oven. The formulations of the resultant TPUs and TRPUs are given in Table 5.

**Table 5**

| Sample | End-Capping Compound | pbw Prepol. 3 | pbw BD | pbw End Group |
|---|---|---|---|---|
| 3B1 | 6-methyl isocytosine | 92.7 | 2.6 | 4.7 |
| 3B2 | 6-methyl isocytosine | 93.3 | 3.0 | 3.7 |
| 3B3 | 6-methyl isocytosine | 93.9 | 3.3 | 2.8 |
| 3B4 | 6-methyl isocytosine | 95.2 | 3.9 | 0.9 |
| 3C1 | 2-amino pyrimidine | 93.8 | 2.6 | 3.6 |
| 3C2 | 2-amino pyrimidine | 94.1 | 3.0 | 2.9 |
| 3C3 | 2-amino pyrimidine | 94.5 | 3.4 | 2.1 |
| 3C4 | 2-amino pyrimidine | 95.4 | 3.9 | 0.7 |
| 3D1 | ethoxyethoxy-ethanol | 92.4 | 2.6 | 5.0 |
| 3D2 | ethoxyethoxy-ethanol | 93.0 | 3.0 | 4.0 |
| 3D3 | ethoxyethoxy-ethanol | 93.6 | 3.4 | 3.0 |
| 3D4 | ethoxyethoxy-ethanol | 95.1 | 3.9 | 1.0 |
| 3E | None | 95.7 | 4.3 | 0.0 |

Tensile testing was performed at ambient temperature and a cross-head speed of 100mm/minute on solvent-cast tensile specimens of type S2 (norm DIN53504; 0.5mm thickness). The results of these tests are recorded in Table 6.

**Table 6**

| Sample | Elongation at break (%) | Stress at break (Mpa) | Stress at 100% elongation | Stress at 200% elongation | Stress at 300% elongation |
|---|---|---|---|---|---|
| 3B1 | 914.39 | 4.88 | 2.41 | 2.76 | 3 |
| 3B2 | 815.8 | 11.41 | 3.04 | 3.67 | 4.31 |
| 3B3 | 869.07 | 17.2 | 3.21 | 3.68 | 4.57 |
| 3B4 | 829.2 | 18.16 | 2.95 | 3.86 | 4.64 |
| 3B5 | 785.65 | 21.83 | 2.88 | 3.53 | 4.35 |
| 3C1 | 913.08 | 4.98 | 2.21 | 2.71 | 3.14 |
| 3C2 | 836.31 | 16.64 | 2.58 | 3.2 | 4.02 |
| 3C3 | 852.2 | 17.91 | 2.55 | 3.19 | 4.08 |
| 3C4 | 803.54 | 26.63 | 3.01 | 3.82 | 5.05 |
| 3C5 | 877.19 | 16.78 | 2.64 | 3.22 | 3.96 |
| 3C6 | 756.46 | 3.42 | 1.99 | 2.38 | 2.70 |
| 3D1 | 867 | 5.52 | 2.3 | 2.69 | 3.13 |
| 3D2 | 801.65 | 4.94 | 2.16 | 2.85 | 3.29 |
| 3D3 | 713.39 | 28.63 | 2.93 | 3.83 | 5.06 |
| High molecular weight | 715 | 31.18 | 2.88 | 3.71 | 4.96 |

Rotational Dynamic Shear (RDS) rheometry was performed on solvent-cast discs (12.5mm radius; 1mm thickness) in temperature sweep mode according to the conditions described in Example 1. The viscosities of the polymers in the molten state at 170°C, 180oC and 200oC are recorded in Table 7.

**Table 7**

| Sample | Melt Viscosity at 180°C (Pa.s) | Melt Viscosity at 200°C (Pa.s) |
|---|---|---|
| 3B1 | 34 | 11 |
| 3B2 | 147 | 20 |
| 3B3 | 550 | 89 |
| 3B4 | 46 | 45 |
| 3B5 | 1500 | 160 |
| 3C1 | 200 | 83 |
| 3C2 | 1216 | 413 |
| 3C3 | 1200 | 351 |
| 3C4 | 2026 | 903 |
| 3C5 | 1230 | 440 |
| 3C6 | 85 | 17 |
| 3D1 | 210 | 46 |
| 3D2 | 225 | 59 |
| 3D3 | 3400 | 1335 |
| 3E | 2500 | 910 |

### Example 4:

Several of the polymers according the invention of Example 1 were tested as adhesives to bond steel to steel. To that aim lap shear test specimen were produced in the following manner. Stainless steel test plates of material type 1.4301 with dimensions of 100 x 25 x 1.5 mm were obtained from Rochell GmbH, Moosbrunn, Germany. Prior to use the test plates were degreased with acetone. The test plates were put on a hot plate, which had a temperature of 150 °C. for at least 2 minutes to increase the temperature of the test plates. In the mean time some polymer was heated above its flow point. To that aim approximately 10 gram of polymer was put in a 125 mL glass jar and heated for at least 15 minutes using an oil bath at a temperature of 200 °C.. A sufficient amount of molten polymer was brought onto a test plate with a metal spatula to slightly overfill the 25 x 25 x 0.3 mm joint of the bond. The joint was assembled by positioning the test plates with 25 mm overlap. Subsequently the test plates were slightly pressed together and clamped for about 15 minutes using a universal double clip. For each polymer six specimens were prepared. The lap joint test specimens were conditioned in the lab for at least 2 weeks prior for physical testing. The tensile strength was determined at a crosshead speed of 50 mm/min. and was calculated from the measured tensile force divided by the overlap area. For each series the average value of the tensile strength, its standard deviation and the failure mode were reported and given in Table 8.

**Table 8.**

| Polymer | Tensile strength (Mpa) | Standard deviation (%) | Mode of failure |
|---|---|---|---|
| 1A1 | 2.9 | 25 | cohesive |
| 1A3 | 2.7 | 20 | adhesive |
| 1B1 | 2.1 | 20 | cohesive |
| 1B2 | 2.5 | 25 | partially co-and adhesive |
| 1B3 | 2.7 | 20 | partially co-and adhesive |
| 1C1 | 2.5 | 20 | partially co-and adhesive |
| 1C2 | 3.1 | 25 | adhesive |
| 1C3 | 3.4 | 30 | adhesive |

### Example 5:

In this experiment a series of polymers were tested which were not according to the invention. These polymers were applied in the same manner as described in Example 4 to prepare the steel/steel lap joints. The results are given in Table 9.

**Table 9**

| Polymer | Tensile strength (MPa) | Standard deviation (%) | Mode of failure |
|---|---|---|---|
| 1D2 | 1.2 | 15 | cohesive |
| 1D3 | 1.0 | 30 | cohesive |
| 1D4 | 2.3 | 15 | adhesive |
| 1E | 1.9 | 40 | adhesive |

### Example 6:

In this experiment a polymer was taken which was not according to the invention. Polymer 2A was applied in the same manner as described in Example 4 to prepare the steel/steel lap joints. The lap joints thus prepared had no mechanical strength and over time the test plates came apart under gravity.

The above examples show, among others, that the TPUs according to the invention having a molecular weight below 5000 are very interesting as the melt viscosity of these TPUs is relatively low at 180°C and varies from 2 to 30 Pa.s.

## Claims

1. A polymer having the following general formula : 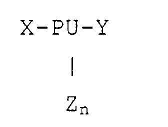 where
PU is a polymer chain comprising at least one polyurethane chain; and
n ranges from 0 to 8;
X, Y and Z, identical or different are H-bonding sites.

2. A polymer according to claim 1, wherein n is zero and X and Y being identical are end-caps of the polymer.

3. A polymer according to claim 1 or 2, wherein the X and Y, and Z, groups have at least two sites capable of H-donor capability and at least two sites capable of H-acceptor capability.

4. A polymer according to any one of claims 1 to 3, wherein the H-donor site is selected in the group consisting of -NH-, -OH or -SH groups.

5. A polymer according to any one of claims 1 to 4, wherein the H-acceptor site comprises a O, N or S atom.

6. A polymer according to any one of claims 1 to 5, wherein X and Y, and Z, includes the group -NH-CO-NH-.

7. A polymer according to any one of claims 1 to 6, wherein X and Y are obtained by the reaction of a terminal isocyanate group with a compound of formula H₂N-R₁R₂, where R₁ and R₂ are each independently a C1-C6 alkyl or C3-C6 cycloalkyl group, or together can form a ring having one or two cycle(s), one or both of R₁ and R₂ being optionally interrupted by one or more heteroatom(s) selected from N, O and S.

8. A polymer according to any one of claims 1 to 8, wherein X and Y are obtained by the reaction of a terminal isocyanate group with a compound of formula H₂N-C(R₃) =N-R₄, where R₃ and R₄ are each independently a C1-C6 alkyl or C3-C6 cycloalkyl group, or together can form a ring having one or two cycle(s), one or both of R₃ and R₄ being optionally interrupted by one or more heteroatom(s) selected from N, O and S.

9. A polymer according to any one of claims 1 to 8, wherein X and Y are obtained by the reaction of a terminal isocyanate group with a compound of formula 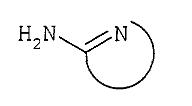 where the curve is a ring having one or two cycles, optionally interrupted by one or two heteroatoms selected from N, O and S.

10. A polymer according to any one of claims 1 to 9, wherein X and Y are obtained by the reaction of a terminal isocyanate group with a compound having a molecular weight of less than 400.

11. A polymer according to any one of claims 1 to 10, wherein X and Y are obtained by the reaction of a terminal isocyanate group with a compound selected from the group consisting of 2-aminopyrimidine, isocytosine, 6-alkylisocytosine preferably 6-methylisocytosine, 2-aminopyridine, 5-amino-uracil 6-tridecylisocytosine, 6-phenyl-isocytosine, 2-amino-6-(3-butenyl)-4-pyrimidone, p-di-(2-amino-6-ethyl-4-pyrimidone) benzene, 2-amino 4-pyridone, 4-pyrimidone 6-methyl-2-amino-4-pyrimidone, 6-ethyl-2-amino-4-pyrimidone, 6-phenyl-2-amino-4-pyrimidone, 6-(p-nitrophenyl)isocytosine, 6-(trifluoromethyl) isocytosine and their mixtures.

12. A polymer according to any one of claims 1 to 11, wherein X and Y are obtained by the reaction of a terminal isocyanate group with 2-aminopyrimidine or 6-alkylisocytosine, preferably 6-methylisocytosine.

13. A polymer according to any one of claims 1 to 12, wherein X and Y, and optionally Z represent based on the weight of the polymer from 0.5 to 20% and preferably from 1 to 10%.

14. A polymer according to any one of claims 1 to 13, wherein the PU is a thermoplastic and/or an elastomeric polyurethane.

15. A polymer according to any one of claims 1 to 14, wherein the PU chain comprises at least one soft chain segment and at least two hard chain segments.

16. A polymer according to any one of claims 1 to 15, wherein said polyurethane chain has an average molecular weight in the range of 2000 to 15000, preferably in the range of 2000 to 10000.

17. Supramolecular polymer comprising units that form H-bonds with one another, wherein at least one of these units is a polymer according to any one of claims 1 to 16.

18. Use of a supramolecular polymer according to claim 17 as an hot melt adhesive.

19. Use of a supramolecular polymer according to claim 17 in rotational or slush molding.

20. Use of a supramolecular polymer according to claim 17 in injection molding.

21. Use of a supramolecular polymer according to claim 17 in the manufacture of TPU foams.

22. Process for the preparation of a polymer according to any one of claims 1 to 16 comprising reacting a polymer comprising at least one polyurethane chain and at least two free -NCO groups with at least one compound E having at least one group able to react with a -NCO group and at least one H-bonding site.

23. Process according to claim 20, comprising reacting a polyisocyanate (1) with a functionality of 2, a polyol (2) having a MW from 750 to 6000 and a functionality from 1.8 to 2.2, a polyol (3) having a MW from 62 to 750 with a functionality of 1.9 to 2.1 and an amine compound (4) of formula H₂N-C(R₃)=N-R₄, where R3 and R4 are each independently a C1-C6 alkyl or C3-C6 cycloalkyl group, or together can form a ring having one or two cycle(s), all being optionally interrupted by one or more heteroatom(s) selected from N, O and S, with a MW less than 400 wherein the amount of isocyanate (1), polyol (2), polyol (3) and amine (4) is 10-50, 35-90, 1-30 and 0.5-20 by weight respectively per 100 parts by weight of isocyanate (1), polyol (2), polyol (3) and amine (4) wherein the reaction is conducted at an isocyanate index of 90 to 200.
